Europäisches Patentamt

European Patent Office

Office européen des brevets

(19)

(11) **EP 0 809 611 B1**

(12) **FASCICULE DE BREVET EUROPEEN**

(45) Date de publication et mention
de la délivrance du brevet:
**20.06.2001   Bulletin 2001/25**

(51) Int Cl.⁷: **C02F 3/12**, C02F 1/44,
C02F 3/10

(21) Numéro de dépôt: **96927087.5**

(22) Date de dépôt: **25.07.1996**

(86) Numéro de dépôt international:
**PCT/FR96/01180**

(87) Numéro de publication internationale:
**WO 97/05072 (13.02.1997 Gazette 1997/08)**

(54) **INSTALLATION POUR LE TRAITEMENT BIOLOGIQUE DES EAUX EN VUE DE LEUR POTABILISATION**

ANLAGE ZUR BIOLOGISCHEN BEHANDLUNG VON WASSER, UM ES TRINKBAR ZU MACHEN

BIOLOGICAL WATER TREATMENT PLANT FOR PRODUCING DRINKING WATER

(84) Etats contractants désignés:
**BE CH DE DK FI GB LI SE**

(30) Priorité:  **25.07.1995  FR 9509336**

(43) Date de publication de la demande:
**03.12.1997   Bulletin 1997/49**

(73) Titulaire: **OTV Omnium de Traitements et de
Valorisation
94417 St Maurice Cédex (FR)**

(72) Inventeurs:
  • **COTE, Pierre
    F-78570 Andrésy (FR)**
  • **SIBONY, Jacques
    F-75018 Paris (FR)**
  • **TAZI-PAIN, Annie
    F-92600 Asnières (FR)**
  • **FAIVRE, Michel
    F-78260 Achères (FR)**

(74) Mandataire: **Vidon, Patrice
    Cabinet Patrice Vidon
    Le Nobel (Bât. A)
    Technopôle Atalante
    2, allée Antoine Becquerel
    BP 90333
    35703 Rennes Cedex 7 (FR)**

(56) Documents cités:
  **EP-A- 0 659 694        US-A- 4 956 093**

  • **PATENT ABSTRACTS OF JAPAN vol. 016, no.
    310 (C-0960), 8 Juillet 1992 & JP,A,04 087694
    (HITACHI KIDEN KOGYO LTD), 19 Mars 1992,**
  • **PATENT ABSTRACTS OF JAPAN vol. 012, no.
    491 (C-554), 21 Décembre 1988 & JP,A,63 200895
    (HITACHI ZOSEN CORP), 19 Août 1988,**
  • **PATENT ABSTRACTS OF JAPAN vol. 011, no.
    136 (C-419), 30 Avril 1987 & JP,A,61 274799
    (AGENCY OF IND SCIENCE &
    TECHNOL;OTHERS: 01), 4 Décembre 1986,**
  • **PATENT ABSTRACTS OF JAPAN vol. 012, no.
    084 (C-482), 17 Mars 1988 & JP,A,62 221493
    (JAPAN ORGANO CO LTD), 29 Septembre 1987,**
  • **PATENT ABSTRACTS OF JAPAN vol. 011, no.
    101 (C-413), 31 Mars 1987 & JP,A,61 249592
    (KURITA WATER IND LTD), 6 Novembre 1986,**
  • **PATENT ABSTRACTS OF JAPAN vol. 016, no.
    349 (C-0967), 28 Juillet 1992 & JP,A,04 104895
    (EBARA INFILCO CO LTD;OTHERS: 01), 7 Avril
    1992,**

EP 0 809 611 B1

**Description**

L'invention concerne le domaine des installations de filtration et d'épuration pour le traitement des eaux.

L'invention s'applique plus précisément à la potabilisation des eaux telles que, notamment, les eaux souterraines, profondes ou karstiques ou les eaux de surface.

D'une façon classique, les installations de traitement des eaux en vue de leur potabilisation comportent généralement une succession d'unités de traitement physico-chimiques du type floculation/décantation/filtration, complétées par une unité d'oxydation.

La floculation est une étape physico-chimique qui a pour but de modifier l'état des particules colloïdales contenues dans l'eau en y ajoutant un coagulant (polychlorure d'aluminium, sulfate d'alumine, chlorure ferrique...) afin de pouvoir les éliminer par décantation.

Les micro-organismes, les micro-polluants, les composés (fer ferreux, manganèse...) qui ne peuvent être éliminés par floculation, sont quant à eux généralement oxydés grâce à l'emploi d'oxydants puissants tels que l'ozone, le chlore, ou encore le bioxyde de chlore.

L'élimination des micropolluants peut également être effectuée par adsorption sur du charbon actif ou bien encore par stripping (aération forcée) s'ils sont volatils.

L'étape de filtration visant à éliminer les particules en suspension est quant à elle classiquement effectuée sur un ou plusieurs lits de matériaux pulvérulents non réactifs, tels que des filtres à sables.

Une installation classique de traitement de l'eau en vue de sa potabilisation pourra ainsi être constituée d'une unité de floculation, suivie d'une unité de décantation, d'une unité de filtration (par exemple sur sable), d'une unité d'ozonation, d'une unité de filtration sur charbon actif en grains ou en poudre, et enfin d'une désinfection.

De telles installations classiques de potabilisation de l'eau de l'état de la technique présentent de nombreux inconvénients.

En premier lieu, étant constitués d'une pluralité d'unités dédiées chacune à un traitement spécifique, elles présentent un dimensionnement important pouvant se révéler gênant pour leur implantation. Ce problème est particulièrement accru lors de la réalisation d'installations de potabilisation en milieu urbain, c'est-à-dire là ou la surface est rare et donc souvent chère.

De plus, de telles installations nécessitent la réalisation de nombreux raccords entre les différentes unités de traitement, raccords qui sont souvent longs à installer, coûteux et qui représentent autant de points de faiblesse de l'installation.

En alternative aux traitements classiques de potabilisation des eaux, il a notamment été récemment proposé une méthode de filtration sur membranes mettant en oeuvre une boucle de circulation des eaux à traiter incluant au moins une membrane de filtration tangentielle, avec injection d'ozone dans la boucle de circulation.

Les installations connues de potabilisation mettant en oeuvre des membranes présentent l'inconvénient d'être couteuses à réaliser notamment du fait qu'elles ne peuvent être adaptées sur des installations classiques existantes, sans transformations importantes.

Les traitements biologiques classiquement mis en oeuvre pour le traitement des eaux résiduaires ont quant à eux été relativement peu utilisés dans le cadre d'installations de potabilisation. En effet, ils impliquent l'utilisation de bactéries qu'il est difficile de contenir aux seules étapes où elles sont utiles et qui risquent donc de polluer à d'autres stades du traitement les eaux que l'on désire potabiliser. De plus, de tels traitements doivent être mis en oeuvre à des températures permettant aux microorganismes utilisés de dégrader la pollution carbonée et/ou la pollution azotée contenues dans ces eaux. Or, il est souhaitable de disposer de traitements de potabilisation pouvant être mis en oeuvre à des températures basses, notamment durant les mois d'hiver.

En particulier, on notera qu'il n'a jamais été envisagé, à la connaissance de la Demanderesse, de faire croître une boue activée dans une eau à potabiliser. En effet, la mise en oeuvre d'une telle boue activée avec des moyens de clarification classique, entrainerait une perte de biomasse par échappement dans l'eau clarifiée supérieure à la production empêchant d'atteindre un âge de boue suffisant.

L'objectif de la présente invention est de présenter une installation pour la potabilisation de l'eau ne montrant pas les inconvénients des installations de l'état de la technique.

Un autre objectif de la présente invention est de proposer une installation de traitement d'une eau en vue de sa potabilisation mettant en oeuvre une étape de traitement biologique.

Un autre objectif de l'invention est de proposer une telle installation pouvant être réalisée à moindre coût en réhabilitant des installations existantes de potabilisation d'eaux mettant en oeuvre des filtres classiques tels que des filtres à sable.

Un autre objectif de l'invention est de décrire une telle installation combinant les intérêts du traitement biologique avec ceux des traitements mettant en oeuvre des composés permettant l'adsorption des micro-polluants ou de la pollution azotée, tels que le charbon actif en poudre, les argiles, les zéolithes...

Un autre objectif de l'invention est également d'inclure dans une installation de traitement de l'eau une ou plusieurs membranes de filtration, tout en permettant le maintien de courant élevés de traitement.

Un autre objectif de la présente invention est également de proposer une installation de traitement de potabilisation de l'eau présentant une grande souplesse d'utilisation et pouvant être utilisée à des températures auxquelles l'activité biologique est faible ou nulle.

Ces différents objectifs, ainsi que d'autres qui apparaîtront par la suite sont atteints grâce à l'invention qui concerne une installation de traitement biologique d'une eau en vue de sa potabilisation caractérisée en ce qu'elle comprend au moins un réacteur biologique muni de moyens d'injection d'un gaz oxygéné, au moins une membrane de microfiltration ou d'ultrafiltration immergée dans ledit réacteur, et des moyens d'adjonction à l'intérieur dudit réacteur d'au moins un matériau pulvérulent en suspension servant de support à une biomasse, ledit matériau pulvérulent pouvant être constitué par une poudre réactive permettant de plus de fixer le substrat nécessaire à ladite biomasse.

L'invention présente ainsi l'originalité de proposer de potabiliser une eau grâce à une boue activée, alors que l'état de la technique dissuadait largement l'homme de l'art de mettre en oeuvre une biomasse libre dans le cadre d'un tel procédé. Selon l'invention, l'utilisation d'une boue activée est rendue possible grâce à l'utilisation d'au moins une membrane de microfiltration ou d'ultrafiltration qui permet de retenir la biomasse au sein du réacteur et donc de l'empêcher de migrer en dehors de celui-ci. L'utilisation d'une telle membrane permet ainsi d'obtenir un âge de boue suffisamment important pour autoriser l'épuration de l'eau.

L'invention présente également l'originalité de proposer l'ajoût d'au moins un matériau pulvérulent dans le réacteur au cours du traitement de potabilisation. Un tel matériau permet de favoriser le développement de la biomasse en servant de support à celle-ci. Toujours selon l'invention, le matériau pulvérulent utilisé pourra constituer une poudre réactive contribuant directement à l'épuration de l'eau en adsorbant sur sa surface les substrats (matières organiques, $NH_4$) nécessaires à la biomasse. Ces poudres réactives pourront ainsi être choisies en fonction de la composition des eaux à potabiliser et notamment en fonction de leur teneur en matières organiques et en NH4. Le charbon actif en poudre (CAP) pourra ainsi être utilisé pour permettre une adsorption poussée des matières organiques et une adsorption légère de $NH_4$, alors que les zéolithes seront plutôt utilisées pour permettre une adsorption poussée de $NH_4$ et une adsorption légère des matières organiques.

L'installation selon l'invention permet donc d'associer avantageusement au sein d'un seul et même réacteur, conjointement les intérêts suscités par un traitement biologique et par une filtration sur membranes. La biomasse fixée permet de dégrader la pollution carbonée biodégradable (CODB) ainsi que la pollution azotée, et les membranes permettent à la fois d'effectuer une filtration de l'eau et d'en éliminer les matières en suspension tout en empêchant efficacement la migration de la biomasse. De plus, une telle installation permet de mettre en oeuvre des poudres réactives pouvant être introduites à la demande dans les eaux à potabiliser en fonction notamment de la composition de ces eaux.

Les moyens d'adjonction d'un matériau pulvérulent dans le réacteur peuvent donc être utilisés pour introduire dans les eaux présentes dans celui-ci un matériau pulvérulent non réactif quelconque servant de support à la biomasse mise en oeuvre, tel que par exemple du sable ou de l'anthracite, ainsi que pour introduire dans ces eaux une ou plusieurs poudres réactives de natures diverses. On notera que l'on entend, dans le cadre de la présente description les termes "poudres réactives" comme visant toute poudre susceptible de réagir avec l'un des composés présents dans les eaux à potabiliser, soit par adsorption, soit par échange d'ions, en vue d'abattre la teneur de ces composés dans les eaux en question. Ces poudres doivent par ailleurs également présenter des caractéristiques physiques de dureté, d'abrasivité et de densité permettant leur fluidisation dans l'eau présente dans le réacteur et les rendant compatibles avec les membranes utilisées.

Ces poudres réactives peuvent avantageusement, grâce à l'installation selon l'invention, être introduites dans les eaux à traiter en fonction de la composition de celles-ci et notamment en fonction de leur charge en micro-polluants et particulièrement en pesticides (atrazine, simazine etc...) qui sont des composés très difficiles à éliminer par voie biologique. Ces poudres réactives peuvent aussi être utilisés pour débarrasser les eaux des métaux toxiques qu'elles contiennent, tels que le cadmium ou le plomb.

Dans certains cas, et comme il sera expliqué ci-après plus en détails, ces poudres réactives pourront aussi être utilisées pour adsorber la pollution carbonée ou azotée lorsque la biomasse mise en oeuvre dans le réacteur sera peu ou pas active, compte-tenu de la température trop faible des eaux à potabiliser transitant dans le réacteur. Ainsi, la mise en oeuvre de ces poudres réactives permettra le cas échéant de prendre fonctionnellement le relais de la biomasse, ce qui conférera à l'installation selon l'invention une très grande souplesse d'utilisation, en autorisant sa mise en oeuvre quelle que soit la température de l'eau à traiter.

La présence de membranes dans le réacteur permet quant à elle d'opérer une filtration très efficace des eaux à potabiliser et d'empêcher tout passage de bactéries à un stade ultérieur du procédé de potabilisation.

Enfin, les moyens d'injection du gaz oxygéné de l'installation ont principalement quatre objectifs. En premier lieu, ils autorisent l'apport d'oxygène nécessaire à la respiration de la biomasse présente dans le réacteur. En second lieu ils assurent la fluidisation des poudres également présente dans celui-ci. En troisième lieu, ils permettent d'assurer le mélange intime desdites poudres avec l'eau et enfin ils permettent d'agiter les membranes immergées dans le réacteur de façon à empêcher, ou à tout le moins à retarder, leur colmatage.

Une telle caractéristique est particulièrement intéressante puisqu'elle permet la réhabilitation de stations de potabilisation obsolètes en nouvelles stations conduisant à de meilleurs résultats sans avoir recours à la construction d'un nouveau génie civil. Il est ainsi possible de diminuer considérablement les coûts induits généralement par la mise en place de nouveaux équipements.

Préférentiellement, ladite poudre réactive est choisie dans le groupe constitué par le charbon actif en poudre, les zéolithes, les argiles et les résines échangeuses. Le charbon actif en poudre (CAP) pourra être préférentiellement utilisé comme composé adsorbant les micro-polluants et en particulier les pesticides. Le CAP pourra donc en particulier être ajouté aux périodes de l'année durant lesquelles les eaux sont fortement chargées en ces composés et notamment au printemps. Les zéolithes, les argiles et les résines échangeuses pourront être utilisées pour capter la pollution azotée en cas de déficience d'activité de la biomasse due à un abaissement de la température ou encore être utilisées pour capter les métaux.

On notera que l'on connait déjà dans l'état de la technique une installation de potabilisation de l'eau par voie non biologique mettant en oeuvre à la fois des membranes de filtration tangentielle et une adjonction de charbon actif en poudre. Une telle installation est décrite dans le demande de brevet française n°2629337. Toutefois, dans le cadre d'une telle installation, l'injection de matériau pulvérulent se fait au niveau d'une boucle de recyclage afin de pouvoir récupérer cette poudre dès que son pouvoir adsorbant est épuisé. Contrairement à une telle installation, l'installation selon l'invention ne nécéssite aucune boucle de recyclage ce qui simplifie notablement sa réalisation. De plus, l'invention se distingue également de la technique décrite dans ce document dans la mesure ou les poudres réactives ne sont pas utilisées simplement pour leur pouvoir adsorbant mais également pour servir de support de fixation à des bactéries, ouvrant ainsi la possibilité de combiner traitement biologique et filtration sur membrane.

Une autre demande de brevet française n°2696440 décrit également une installation de potabilisation d'eau non biologique mettant en oeuvre des unités distinctes de décantation de mélange avec un réactif pulvérulent et de filtration tangeantielle sur membranes. Dans cette installation de l'art antérieur, le réactif pulvérulent est aussi renvoyé vers l'unité de décantation par une boucle de recyclage et constamment renouvelé dès que son pouvoir adsorbant est épuisé.

L'invention se distingue donc également des technologies décrites dans ces deux documents par les caractéristiques selon laquelle elle propose d'introduire directement plusieurs poudres réactives dans le réacteur où sont présentes les membranes et en ce qu'elle propose de mettre en oeuvre ces poudres pour servir également de support à une biomasse.

Selon un autre aspect préférentiel particulièrement intéressant de l'invention ladite installation comprend de plus au moins une unité de pré-dénitrification anoxique en amont dudit réacteur biologique. L'utilisation d'un bassin de dénitrification en combinaison avec un bassin de nitrification est bien connue dans le domaine des traitements des eaux résiduaires. Toutefois, jusqu'ici une telle utilisation n'était pas possible dans le cadre des traitements de potabilisation, compte-tenu des risques d'entraînement des bactéries vers les étapes ultérieures du traitement. Une telle prédénitrification est rendue possible grâce à l'installation selon l'invention dans la mesure ou un tel risque est supprimé par la présence des membranes de filtration à fibres creuses dont la taille des pores est prévu pour empêcher le passage de tout micro-organismes dans les filtrats.

Par ailleurs, on notera que dans le cadre des installations de traitement des eaux résiduaires, les boues du bassin de nitrification sont renvoyées en tête d'installation pour être traitées dans le bassin de dénitrification. Un tel renvoi est inutile dans le cadre du traitement des eaux potables puisque les nitrates sont présents dans l'eau brute et que peu de nitrates sont formés dans l'étape avale de nitrification.

Préférentiellement, l'installation comprend des moyens de prétraitement prévus en amont dudit réacteur biologique, incluant des moyens de clarification. Ces moyens de prétraitement peuvent également inclure une unité de floculation / coagulation en amont desdits moyens de clarification. De telles moyens de prétraitement peuvent aussi être réalisés à partir des moyens de prétraitement d'une installation classique sur filtre à sable réhabilitée.

Egalement préférentiellement, ledit réacteur biologique présente dans sa partie inférieure et supérieure des moyens de purge de boues. Les boues récupérées grâce à ces moyens de purge peuvent être réacheminées vers les moyens de traitement des boues.

Selon un aspect préférentiel particulièrement intéressant de l'invention, le génie civil utilisé pour réaliser ladite installation résulte de la conversion d'un génie civil existant d'une installation de potabilisation d'eau par filtration physique sur matériau granulaire, ledit réacteur biologique étant constitué par un bassin de filtration sur matériau granulaire de ladite installation de potabilisation.

On notera à ce sujet que la mise en oeuvre de moyens de dénitrification amont n'empêche pas une telle réhabilitation d'une installation existante, la dimension des filtres à sables autorisant la compartimentation de ceux-ci pour former à la fois un bassin de prédénitrification et un réacteur biologique de nitrification et de filtration sur membranes à fibres creuses.

Egalement préférentiellement, l'installation comprend des moyens de mesure des concentrations en polluants de l'eau à traiter auxquels sont asservis lesdits moyens d'adjonction d'au moins un matériau pulvérulent.

L'invention concerne également un procédé de traitement biologique d'une eau en vue de sa potabilisation caractérisé en ce qu'il consiste à faire transiter l'eau dans une installation telle que décrite ci-dessus et à utiliser lesdits moyens d'adjonction de ladite installation pour permettre l'addition dans ledit réacteur d'au moins un matériau pulvérulent servant de support à la biomasse et/ou l'addition au moins intermittente dans ledit réacteur d'au moins une poudre réactive, ladite poudre réactive étant ajoutée en fonction des polluants présents dans l'eau brute et/ou de la température de l'eau à potabiliser.

Le procédé selon l'invention présente donc également la caractéristique originale consistant à renforcer le rôle de support biologique rempli par le matériau pulvérulent lorsque les conditions du traitement de potabilisation l'exigent par l'addition d'au moins une poudre réactive. Un tel renforcement peut notamment s'avérer nécessaire lorsque la température de traitement est trop basse pour permettre l'activité biologique de la biomasse ou encore lors d'une augmentation de la charge en eau à traiter.

Selon une variante de l'invention, le procédé selon l'invention est ainsi mis en oeuvre lorsque la température de l'eau à potabiliser autorise une activité biologique normale de ladite biomasse permettant la dégradation biologique du CODB et de la pollution azotée qu'elle contient, et consiste à mettre en oeuvre lesdits moyens d'adjonction d'un matériau pulvérulent pour distribuer au moins une poudre réactive dans ledit réacteur en fonction d'au moins un paramètre choisi dans le groupe constitué par la teneur de l'eau en pesticides, la teneur de l'eau en COD et la teneur de l'eau en métaux lourds.

En pratique, la température à laquelle le métabolisme des bactéries est inhibé est de l'ordre de 4-5°C. Durant les périodes où la température des eaux à potabiliser est supérieure à cette température, l'installation selon l'invention pourra donc être utilisée pour ajouter au moins périodiquement grâce aux moyens prévus à cet effet une ou plusieurs poudres réactives chargées d'abattre la pollution carbonée non biodégradable, les pesticides ainsi que les métaux contenus dans l'eau à potabiliser. Les bactéries fixées se chargeant quant à elles de l'élimination de la pollution carbonée biodégradable et de l'élimination de la pollution azotée.

Dans ce cas et comme déjà précisé ci-dessus, le matériau pulvérulent utilisé sera préférentiellement du charbon actif en poudre pour éliminer les pesticides et des zéolithes pour adsorber les métaux lourds présents.

Selon une variante intéressante d'un tel procédé d'utilisation, les poudres réactives dont le pouvoir adsorbant est épuisé peuvent être conservées dans ledit réacteur biologique, celles-ci constituant alors un matériau pulvérulent non réactif servant de support de fixation à la biomasse.

Selon un autre aspect du procédé selon l'invention, lesdits moyens d'adjonction de matériau pulvérulent sont mis en oeuvre lorsque la température de l'eau à potabiliser inhibe l'activité de ladite biomasse, afin de distribuer dans le réacteur au moins une première poudre réactive chargée de l'adsorption des composés organiques et au moins une seconde poudre réactive chargée de l'adsorption de la pollution ammoniacale. Ainsi, lorsque la température des eaux à traiter est inférieure à 4-5°C, les poudres réactives sont ajoutées pour capter les composés indésirables présents dans l'eau traiter et se substituer ainsi à l'action des bactéries.

Dans ce cas ladite première poudre est préférentiellement du charbon actif en poudre et ladite seconde poudre est préférentiellement choisie dans le groupe constitué par les zéolithes et les argiles.

Avantageusement, le procédé comprend alors une étape consistant à renouveler les première et seconde poudres lorsque le pouvoir adsorbant de celles-ci arrive à épuisement.

L'invention, ainsi que les différents avantages qu'elle présente seront plus facilement compris grâce à la description qui va suivre d'un mode de réalisation non limitatif de l'invention en référence aux dessins, dans lesquels :

- la figure 1 représente de façon schématique une installation selon la présente invention,
- la figure 2 représente l'évolution dans le temps des concentrations en atrazine de l'eau à traiter et de l'eau traitée grâce à l'installation représentée à la figure 1,
- la figure 3 représente l'évolution dans le temps des concentrations en ammoniaque de l'eau à traiter et de l'eau traitée grâce à l'installation représentée à la figure 1.

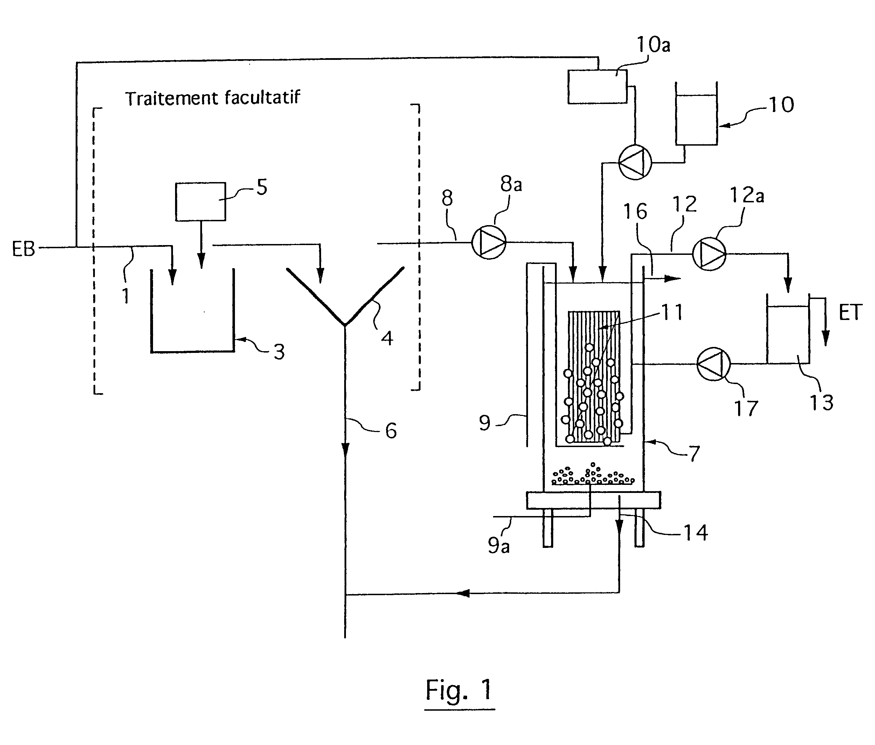

En référence à la figure 1, l'eau brute (EB) à traiter arrive dans l'installation représentée par une canalisation 1.

L'eau est ensuite acheminée vers des moyens de prétraitement constitués par une unité de coagulation/floculation 3 et un clarificateur 4. On notera que ces moyens de prétraitement sont facultatifs. Ainsi, il pourra être envisagé d'envoyer l'eau directement dans les moyens de traitement biologique décrits ci-après, sans la faire transiter dans ce moyens de prétraitement, lorsque l'eau sera peu ou pas chargée en polluants susceptibles d'être coagulés. Il pourra aussi être envisagé, dans d'autres modes de réalisation, de ne pas prévoir de tels moyens de prétraitement dans l'installation.

L'unité de coagulation/floculation 3 comprend des moyens de distribution 5 d'un réactif coagulant (polychlorure d'aluminium, sulfate d'alumine, chlorure ferrique...) permettant de faire coaguler les matières colloïdales se trouvant en suspension dans l'eau. Le mélange d'eau et de matières coagulées est ensuite dirigé vers le clarificateur 4 afin d'y subir une décantation. Les boues provenant de cette décantation sous soutirées en 6.

Les surverses du clarificateur 4 sont ensuite envoyées vers un réacteur biologique 7 d'une contenance de 200 litres par une canalisation 8 grâce à une pompe 8a commandée par le niveau d'eau dans la réacteur 7.

Un module d'ultrafiltration 11 constituées de fibres creuses à pression externe (filtration de l'extérieur vers l'intérieur de la membrane) représentant une surface filtrante de 12m$^2$, est plongé dans le réacteur 7. Ces membranes immergées 11 présentent une compacité et un flux permettant des débits de traitement comparables aux filtres à sable existants, c'est-à-dire de l'ordre de 6 à 8 m$^3$/m$^2$/h. Le perméat provenant de ce module est évacué par une canalisation 12 après pompage par aspiration grâce à une pompe 12a. L'eau traitée (ET) est récupérée à la sortie de la canalisation 12 et transite dans un réservoir 13 avant d'être évacuée de l'installation.

Conformément à l'invention, des moyens d'adjonction de matériaux pulvérulents 10, constitués par une barbotine, permettent d'ajouter à l'eau transitant dans le réacteur 7 tant des poudres non réactives, tels que du sable ou de l'anthracite servant de support de fixation à une biomasse, que des poudres réactives, de façon continue ou intermittente. Ces poudres réactives sont préférentiellement constituées de charbon actif en poudre (CAP), de zéolithes, d'argiles ou encore de résines échangeuses d'ions et sont introduites dans les eaux à traiter en fonction de la charge des eaux à traiter et de la température de celles-ci.

A cet effet, des moyens de mesure 10a des concentrations en polluants dans l'eau à traiter sont prévus, lesdits moyens d'adjonction 10 de matériaux pulvérulents étants asservis à ces moyens de mesure 10a.

Egalement conformément à l'invention, le réacteur 7 est équipé de moyens d'injection d'un gaz oxygéné, en l'occurence de l'air, constitués par deux rampes d'injection 9,9a prévues dans la partie inférieure du réacteur. Ces moyens d'aération permettent d'obtenir un réacteur parfaitement mélangé.

Les moyens d'aération 9 permettent à la fois de maintenir en suspension les poudres présentes dans le réacteur 7, de mélanger l'eau avec ces poudres, d'apporter l'oxygène nécessaire aux bactéries et de secouer les membranes immergées afin de les décolmater.

Le décolmatage des membranes est donc assuré en permanence par une injection d'air le long des fibres, et cycliquement par une injection d'eau traitée provenant du réservoir 13 à contre courant (de l'intérieur vers l'extérieur de la fibre), grâce à une pompe à reflux 17.

Le réacteur 7 présente par ailleurs des moyens de purges des boues 14 dans sa partie inférieure pour évacuer les purges basses par une canalisation 15, les purges hautes du réacteur 7 étant quant à elles évacuées par une canalisation 16. Les purges hautes sont essentiellement constitués des fines de matériaux pulvérulents et les purges basses de matières décantables. Ces purges permettent d'uniformiser la granulométrie des poudres présentes dans le réacteur 7.

La purge de fond permet de gérer l'âge des boues dans le réacteur par la formule suivante:

$$\text{Age des boues} = \text{volume du réacteur} / \text{volume de la purge journalière.}$$

Par ailleurs, le temps de résidence hydraulique (TRH) de l'eau à traiter dans le réacteur est donné par la formule suivante :

$$\text{TRH} = \text{volume du réacteur} / \text{débit d'eau traitée.}$$

Lors de la mise en oeuvre d'une telle installation, si l'eau arrivant dans le réacteur 7 ne contient pas de micropollution organique dissoute et si la température le permet, le système fonctionne sans distribution de poudre adsorbante à partir de la barbotine 10, l'élimination de l'ammoniaque étant alors assurée par les bactéries nitrifiantes concentrées dans le réacteur 7.

Du charbon actif en poudre, ou une autre poudre adsorbante réactive, est injecté dans le réacteur, grâce à la barbotine 10 lorsque l'eau à traiter nécessite une élimination de la pollution organique dissoute (du mois de mars au mois d'août par exemple).

Durant l'hiver, si la température de l'eau est trop froide, un ajout de zéolithe dans le réacteur permet de maintenir dans l'eau traitée une concentration en ammoniaque qui répond aux normes de potabilité.

Résultats

L'installation représentée à la figure 1 a été utilisée pour traiter une eau de surface avec un débit net de 10 m$^3$/jour.

Le tableau 1 donne la qualité physico-chimique et bactériologique de l'eau à traiter (EB) et de l'eau traitée (ET) par l'installation précédemment décrite.

Comme on peut le voir sur le tableau 1 présenté ci-après, l'installation permet une élimination des composés sous forme particulaire totale ou quasi-totale. On peut observer en effet un rendement moyen d'élimination de 85 % de la turbidité, de 100 % du fer, de 80 % de l'aluminium et de 100 % des germes indicateurs de contamination fécale.

Tableau 1 :

| qualité physico-chimique et bactériologique de l'eau à traiter et traitée par le système. | | | | | | |
|---|---|---|---|---|---|---|
| Paramètres | Unités | | Moyenne | Mini | Maxi | Nb mesures |
| Turbidité | NTU | EB | 1,75 | 1,1 | 2,6 | 35 |
| | | ET | 0,25 | 0,13 | 0,54 | 35 |
| Fer | µg/l | EB | 30 | <20 | 50 | 8 |
| | | ET | <20 | <20 | <20 | 8 |
| Aluminium | µg/l | EB | 305 | 195 | 345 | 8 |
| | | ET | 60 | 35 | 70 | 8 |
| Coliformes 37°C | nb/100ml | EB | 37 600 | 5 100 | 85 000 | 6 |
| | | ET | 0 | 0 | 0 | 6 |
| Coliformes thermotolérants 44 ° C | nb/100 ml | EB | 9 500 | 1 500 | 26 000 | 6 |
| | | ET | 0 | 0 | 0 | 6 |
| Streptocoques D | nb/100 ml | EB | 1 225 | 84 | 3 700 | 6 |
| | | ET | 0 | 0 | 0 | 6 |
| Spores de batéries anérobies sulfatoréducteurs | | EB | 28 | 7 | 60 | 6 |
| | nb/20ml | ET | 0 | 0 | 0 | 6 |

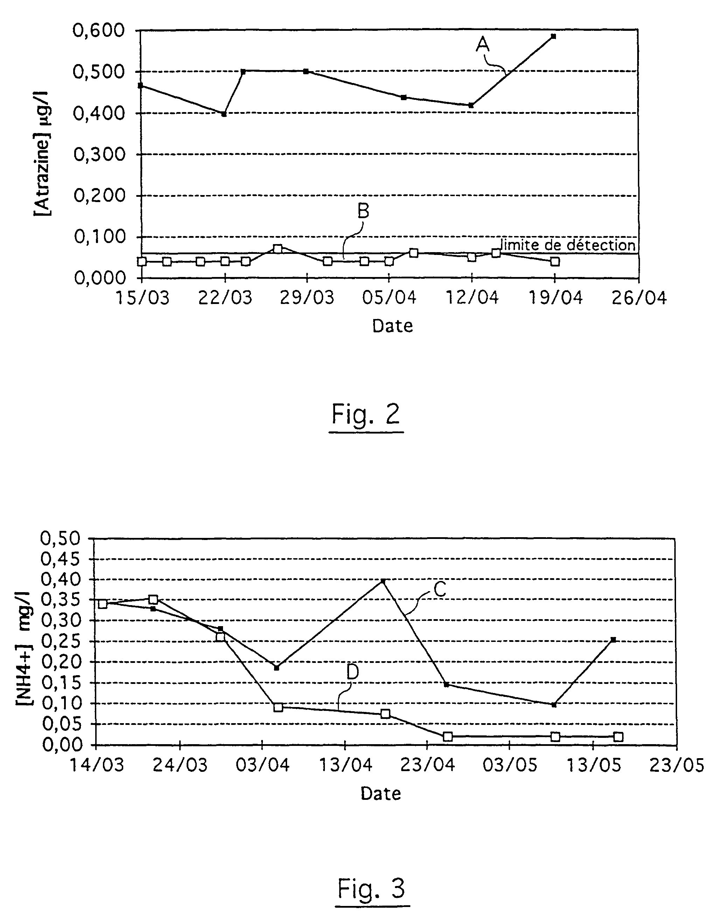

Comme on peut le voir sur la figure 2, sur laquelle la courbe A montre l'évolution de la teneur en atrazine de l'eau à traiter et sur laquelle la courbe B montre l'évolution de la concentration en atrazine de l'eau traitée, l'installation permet un abattement total de l'atrazine pour des concentrations dans l'eau à traiter de 0,400 à 0,600 µg/l, avec un dosage de 6,7 g/l de charbon actif en poudre dans l'eau brute, un temps de séjour hydraulique de 25 minutes, et un âge de boues de 30 jours. Ces conditions correspondent à une concentration à l'équilibre de 10 g/l de charbon en poudre dans le bioréacteur.

Comme on peut le voir sur la figure 3, sur laquelle la courbe C montre l'évolution de la teneur en ammoniaque de l'eau à traiter et sur laquelle la courbe D montre l'évolution de la concentration en ammoniaque de l'eau traitée, l'installation permet également d'assurer une élimination totale de l'ammoniaque par les bactéries nitrifiantes, 40 jours après sa mise en service. En effet, dans les mêmes conditions de fonctionnement que celles citées au paragraphe ci-dessus et avec des températures de l'eau à de 11°C, le système s'est ensemencé progressivement avec de telles bactéries nitrifiantes.

Comme on peut le voir sur le tableau 3, parallèlement, le réacteur "en fonctionnement biologique" a assuré une élimination du carbone organique biodégradable, pour atteindre des concentrations dans l'eau traitée de 0,2 à 0,3 mg/l.

Le tableau 3 donne le rendement d'élimination de l'ammoniaque par une zéolithe: la clinoptilolithe. Un taux de traitement de 30 ppm et un temps de résidence hydraulique de 20 minutes permet un abattement de 56 % pour des concentrations dans l'eau à traiter de 0,5 mg/l. Cette fonction d'adsorption permet de prolonger le temps séjour de l'ammoniaque dans le réacteur lorsque les cinétiques de nitrification biologiques sont lentes.

Tableau 2 :

| élimination du CODB par le réacteur biologique | | | |
|---|---|---|---|
| Paramètres | Unité | 1 | 2 |
| [CODB] Eau à traiter | mg/l | 0,8 | 0,7 |
| [CODB] Eau traitée | mg/l | 0,2 | 0,3 |

Tableau 3 :

| rendement d'adsorption de l'ammoniaque par la clinoptilolithe | | |
|---|---|---|
| [N-NH4+] Eau à traiter | mg/l | 0,5 |
| [N-NH4+] Eau traitée | mg/l | 0,22 |
| Rendement d'adsorption | % | 56 |

Une telle installation présente donc une grande souplesse d'utilisation puisqu'elle permet d'éliminer un grand nombre de polluants de natures différentes et qu'elle est opérationnelle quelle que soit la température des eaux à traiter.

De plus, l'installation ici décrite présente l'avantage de pouvoir être réalisée à partir d'une installation existante de potabilisation sur filtre à sable. Le réacteur 7 peut ainsi être formé dans le bassin accueillant à l'origine le lit de sable utilisé par la filtration. L'invention propose donc une solution intéressante de réhabilitation de telles installations classiques et permet d'obtenir une potabilisation améliorée de l'eau à moindre coût.

L'exemple de réalisation ici décrit n'a pas pour objet de réduire la portée de l'invention. Il pourra donc être envisagé d'y apporter des modifications sans sortir du cadre de celles-ci. En particulier, il pourra être envisagé de munir l'installation d'une zone de dénitrification en amont du réacteur 7 ou encore, comme déjà mentionné, de supprimer les moyens de pré-traitement constitués par l'unité de floculation-décantation et par le clarificateur. Il pourra aussi être envisagé d'utiliser des poudres réactives différentes de celles-mentionnées.


**Revendications**

1.  Installation de traitement biologique d'une eau en vue de sa potabilisation caractérisée en ce qu'elle comprend

    - au moins un réacteur biologique (7) muni de moyens d'injection d'un gaz oxygéné (9) ;
    - au moins une membrane de séparation (11) de microfiltration ou d'ultrafiltration immergée dans ledit réacteur (7) ;
    - de la biomasse ;
    - au moins un matériau pulvérulent en suspension servant de support à ladite biomasse et,
    - des moyens d'adjonction (10) à l'intérieur dudit réacteur (7), dudit matériau pulvérulent, celui-ci pouvant être constitué par une poudre réactive permettant de plus de fixer le substrat nécessaire à ladite biomasse.

2.  Installation selon la revendication 1 caractérisée en ce que ladite poudre réactive est choisie dans le groupe constituée par le charbon actif en poudre, les zéolithes, les résines échangeuses d'ions et les argiles.

3.  Installation selon l'une quelconque des revendications 1 ou 2 caractérisée en ce qu'elle comprend de plus au moins une unité de dénitrification anoxique en amont dudit réacteur biologique (7).

4.  Installation selon l'une quelconque des revendications 1 à 3 caractérisée en ce que ledit réacteur biologique (7) présente dans sa partie inférieure des moyens de purge de boues (14).

5.  Installation selon l'une quelconque des revendications 1 à 4 caractérisée en ce qu'elle comprend des moyens de prétraitement (3,4) prévus en amont dudit réacteur biologique, incluant des moyens de clarification (3).

6.  Installation selon l'une quelconque des revendications 1 à 5 caractérisée en ce que lesdites membranes (11) sont constituées par des membranes à fibres creuses.

7.  Installation selon l'une quelconque des revendications 1 à 6 caractérisée en ce qu'elle comprend des moyens de mesure (10a) des concentrations en polluants de ladite eau auxquels sont asservis lesdits moyens d'adjonction (10).

8.  Procédé de traitement biologique d'une eau en vue de sa potabilisation caractérisé en ce qu'il consiste à faire transiter l'eau dans une installation selon l'une des revendications 1 à 7, et à utiliser lesdits moyens d'adjonction de ladite installation pour permettre l'addition dans ledit réacteur d'au moins un matériau pulvérulent servant de support à la biomasse et/ou l'addition au moins intermittente dans ledit réacteur d'au moins une poudre réactive, ladite poudre réactive étant ajoutée en fonction des polluants présents dans l'eau brute et/ou de la température de l'eau à potabiliser.

9. Procédé selon la revendication 8 caractérisé en ce qu'il est mis en oeuvre lorsque la température de l'eau à potabiliser autorise une activité normale de ladite biomasse permettant la dégradation biologique de la CODB et de la pollution azotée qu'elle contient, et en ce qu'il consiste à mettre en oeuvre lesdits moyens d'adjonction pour distribuer au moins une poudre réactive dans ledit réacteur en fonction d'au moins un paramètre choisi dans le groupe constitué par la teneur de l'eau en pesticides, la teneur de l'eau en COD et la teneur de l'eau en métaux lourds.

10. Procédé selon la revendication 9 caractérisé en ce qu'il consiste à mettre en oeuvre lesdits moyens d'adjonction d'au moins un matériau pulvérulent pour distribuer du charbon actif en poudre dans ledit réacteur afin d'adsorber le COD et les pesticides présents dans l'eau à potabiliser.

11. Procédé selon la revendication 9 ou 10 caractérisé en ce qu'il consiste à mettre en oeuvre lesdits moyens d'adjonction d'au moins un matériau pulvérulent pour distribuer une zéolithe ou de l'argile dans ledit réacteur afin d'adsorber les métaux lourds présents dans l'eau à potabiliser.

12. Procédé selon l'une quelconque des revendications 8 à 11 caractérisé en ce qu'il comprend une étape consistant à conserver dans ledit réacteur biologique les poudres réactives dont le pouvoir adsorbant est épuisé, celles-ci constituant alors un matériau pulvérulent non réactif servant de support de fixation à la biomasse.

13. Procédé selon la revendication 8 caractérisé en ce que lesdits moyens d'adjonction de matériau pulvérulent sont mis en oeuvre lorsque la température de l'eau à potabiliser inhibe l'activité biologique de ladite biomasse, afin de distribuer dans le réacteur au moins une première poudre réactive chargée de l'adsorption des composés organiques et au moins une seconde poudre réactive chargée de l'adsorption de la pollution ammoniacale.

14. Procédé selon la revendication 13 caractérisé en ce que ladite première poudre est du charbon actif en poudre.

15. Procédé selon la revendication 13 ou 14 caractérisé en ce que ladite seconde poudre est choisie dans le groupe constitué par les zéolithes et les argiles.

16. Procédé selon l'une quelconque des revendications 13 à 15 caractérisé en ce qu'il consiste à renouveler les première et seconde poudres lorsque le pouvoir adsorbant de celles-ci arrive à épuisement.

## Claims

1. Plant for the biological treatment of water to render it drinkable, characterized in that it comprises:

   - at least one biological reactor (7) provided with means for injecting an oxygenated gas (9);
   - at least one separation membrane (11) for microfiltration or ultrafiltration immersed in said reactor (7);
   - biomass;
   - at least one pulverulent material in suspension serving as a support for said biomass; and
   - means (10) for the addition within said reactor (7) of said pulverulent material, the latter possibly being made up of a reactive powder which also allows the required substrate to be fixed to said biomass.

2. Plant according to Claim 1, characterized in that said reactive powder is chosen from the group consisting of powdered activated carbon, zeolites, ion exchange resins and clays.

3. Plant according to either of Claims 1 and 2, characterized in that it also comprises at least one anoxic denitrification unit upstream of said biological reactor (7).

4. Plant according to any one of Claims 1 to 3, characterized in that said biological reactor (7) has sludge drainage means (14) in its lower part.

5. Plant according to any one of Claims 1 to 4, characterized in that it comprises pretreatment means (3,4) provided upstream of said biological reactor, including clarification means (3).

**6.** Plant according to any one of Claims 1 to 5, characterized in that said membranes (11) are made up of hollow fibre membranes.

**7.** Plant according to any one of Claims 1 to 6, characterized in that it comprises means (10a) for measuring concentrations of pollutants of said water, to which means are slaved said addition means (10).

**8.** Method of biological water treatment to produce drinkable water, characterized in that it consists in passing the water through a plant according to one of Claims 1 to 7, and in using said addition means of said plant to permit the addition in said reactor of at least one pulverulent material serving as a support for the biomass and/or the at least intermittent addition in said reactor of at least one reactive powder, said reactive powder being added as a function of the pollutants present in the raw water and/or of the temperature of the water to be rendered drinkable.

**9.** Method according to Claim 8, characterized in that it is implemented when the temperature of the water to be rendered drinkable allows normal activity of said biomass permitting biological degradation of CODB and nitrogenous pollution in said water, and in that it consists in employing said addition means to distribute at least one reactive powder in said reactor as a function of at least one parameter chosen from the group consisting of pesticide content of the water, COD content of the water and heavy metal content of the water.

**10.** Method according to Claim 9, characterized in that it consists in employing said means of addition of at least one pulverulent material to distribute powdered activated carbon in said reáctor in order to adsorb COD and pesticides present in the water to be rendered drinkable.

**11.** Method according to Claim 9 or 10, characterized in that it consists in employing said means of addition of at least one pulverulent material to distribute a zeolite or clay in said reactor in order to adsorb the heavy metals present in the water to be recorded drinkable.

**12.** Method according to any one of Claims 8 to 11, characterized in that it comprises a step consisting in biological maintaining within said reactor the reactive powders whose adsorbent power has been exhausted, the latter subsequently forming a nonreactive pulverulent material which serves as a fixation support for the biomass.

**13.** Method according to Claim 8, characterized in that said means of addition of pulverulent material are employed when the temperature of the water to be rendered drinkable inhibits the biological activity of said biomass, in order to distribute within the reactor at least a first reactive powder intended to adsorb organic compounds and at least a second reactive powder intended to adsorb ammonia pollution.

**14.** Method according to Claim 13, characterized in that said first powder is powdered activated carbon.

**15.** Method according to Claim 13 or 14, characterized in that said second powder is chosen from the group consisting of zeolites and clays.

**16.** Method according to any one of Claims 13 to 15, characterized in that it consists in renewing the first and second powders when the adsorbent power of the latter is exhausted.

**Patentansprüche**

**1.** Anlage zur biologischen Trinkwasseraufbereitung,
dadurch gekennzeichnet, daß sie folgendes umfaßt:

- mindestens einen biologischen Reaktor (7), der über Mittel zum Einleiten eines sauerstoffhaltigen Gases (9) verfügt;
- mindestens eine im Reaktor (7) eingetauchte Trennmembran (11) zum Mikro-oder Ultrafiltern;
- Biomasse;
- mindestens ein in Suspension befindlicher, pulverförmiger Stoff, der als Substrat für die Biomasse dient und
- Mittel zum Zuführen (10) des pulverförmigen Stoffes im Inneren des Reaktors (7), wobei der Stoff ein reaktives Pulver sein kann, welches das für die Biomasse erforderliche Substrat festhalten kann.

**2.** Anlage gemäß Anspruch 1,

dadurch gekennzeichnet, daß das reaktive Pulver aus der Stoffgruppe gewählt wird, die aus pulverförmiger Aktivkohle, aus Zeolithen, aus Ionentauscherharzen und aus Tonarten gebildet wird.

3. Anlage nach einem der Ansprüche 1 oder 2,
dadurch gekennzeichnet, daß sie zusätzlich mindestens eine anaerobische Denitrierungseinheit oberhalb des biologischen Reaktors (7) umfaßt.

4. Anlage nach einem der Ansprüche 1 bis 3,
dadurch gekennzeichnet, daß der untere Teil des biologischen Reaktors (7) über Mittel zum Ablassen der Schlämme (14) verfügt.

5. Anlage nach einem der Ansprüche 1 bis 4,
dadurch gekennzeichnet, daß sie über Mittel zum Vorbehandeln (3, 4) verfügt, die oberhalb des biologischen Reaktors angebracht sind und die Klärmittel (3) enthalten.

6. Anlage nach einem der Ansprüche 1 bis 5,
dadurch gekennzeichnet, daß es sich bei den Membranen (11) um Hohlfasermembranen handelt.

7. Anlage nach einem der Ansprüche 1 bis 6,
dadurch gekennzeichnet, daß sie über Mittel zum Messen (10a) der Verunreinigungskonzentration im Wasser verfügt, welche die Zufuhrmittel (10) steuern.

8. Anlage zur biologischen Trinkwasseraufbereitung,
dadurch gekennzeichnet, daß das Wasser durch eine Anlage gemäß einem der Ansprüche 1 bis 7 läuft, unter Verwendung des Zufuhrmittels dieser Anlage, um mindestens einen pulverförmigen Stoff in den Reaktor einzuleiten, der als Substrat für die Biomasse dient und/oder um mindestens ein reaktives Pulver in intermittierender Weise in den Reaktor einzuleiten, wobei das reaktive Pulver als Funktion der im unbehandelten Wasser vorhandenen Verunreinigungen und/oder der Temperatur des zu Trinkwasser aufzubereitenden Wassers zugegeben wird.

9. Verfahren gemäß Anspruch 8,
dadurch gekennzeichnet, daß es dann angewandt wird, wenn die Temperatur des zu Trinkwasser aufzubereitenden Wassers eine normale Aktivität der Biomasse zuläßt, wobei der biologische Zerfall der CODB und der stickstoffhaltigen Verunreinigungen ermöglicht wird und, daß es darin besteht, die Zufuhrmittel zu betätigen, um mindestens ein reaktives Pulver im Reaktor als Funktion von mindestens einem Parameter aus der Gruppe zu verteilen, die aus dem Inhalt an Insektenvernichtungsmittel, an COD und an Schwermetallen im Wasser gebildet wird.

10. Verfahren gemäß Anspruch 9,
dadurch gekennzeichnet, daß es im Anwenden der Zufuhrmittel von mindestens einem pulverförmigen Stoff besteht, um pulverförmige Aktivkohle mit dem Zweck im Reaktor zu verteilen, das im zu Trinkwasser aufzubereitende Wasser enthaltene COD und Insektenvernichtungsmittel zu adsorbieren.

11. Verfahren gemäß Anspruch 9 oder 10,
dadurch gekennzeichnet, daß es im Anwenden der Zufuhrmittel von mindestens einem pulverförmigen Stoff besteht, mit dem Zweck, Zeolith oder Ton innerhalb des Reaktors zu verteilen, um die in dem zu Trinkwasser aufzubereitendem Wasser enthaltenen Schwermetalle zu adsorbieren.

12. Verfahren gemäß einem der Ansprüche 8 bis 11,
dadurch gekennzeichnet, daß es einen Schritt umfaßt, bei dem die reaktiven Pulver, deren Adsorptionsvermögen erschöpft ist, im biologischen Reaktor zu erhalten, wobei diese dann einen nicht reaktiven pulverförmigen Stoff bilden, der als Substrat für die Biomasse dient.

13. Verfahren gemäß Anspruch 8,
dadurch gekennzeichnet, daß die Mittel zum Zuführen von pulverförmigem Stoff dann angewandt werden, wenn die Temperatur des zu Trinkwasser aufzubereitenden Wassers die biologische Aktivität der Biomasse hemmt, um im Reaktor mindestens ein erstes reaktives Pulver zu verteilen, das der Adsorption organischer Verbindungen dienen soll sowie mindestens ein zweites reaktives Pulver, das die ammoniakhaltigen Verunreinigungen adsorbieren soll.

**14.** Verfahren gemäß Anspruch 13,
dadurch gekennzeichnet, daß es sich beim ersten Pulver um pulverförmige Aktivkohle handelt.

**15.** Verfahren gemäß einem der Ansprüche 13 oder 14,
dadurch gekennzeichnet, daß das zweite Pulver aus der Zeolithen und Tonerden umfassenden Gruppe gewählt wird.

**16.** Verfahren gemäß einem der Ansprüche 13 bis 15,
dadurch gekennzeichnet, daß es im Erneuern der ersten und zweiten Pulver besteht, wenn das Adsorptionsvermögen derselben erschöpft ist.

Fig. 1

EP 0 809 611 B1

Fig. 2

Fig. 3